# EUROPÄISCHE PATENTSCHRIFT

(11) **EP 2 368 062 B1**
(45) Veröffentlichungstag und Bekanntmachung des Hinweises auf die Patenterteilung: **27.06.2012**
(21) Anmeldenummer: 09793496.2
(22) Anmeldetag: 01.12.2009
(51) Int. Cl.: F16K 31/00, F16K 24/04

(54) **THERMISCH GESTEUERTES EXPANSIONSVENTIL SOWIE MIT EINEM SOLCHEN AUSGERÜSTETE ANORDNUNG**
THERMALLY CONTROLLED EXPANSION VALVE AND ARRANGEMENT COMPRISING THE SAME
SOUPAPE DE DÉTENTE THERMOCOMMANDÉE ET DISPOSITIF MUNI D'UNE TELLE SOUPAPE DE DÉTENTE

(30) Priorität: 02.12.2008 DE 102008060973
(43) Veröffentlichungstag der Anmeldung: 28.09.2011
(73) Patentinhaber: Technische Universität Ilmenau, 98693 Ilmenau (DE); AZ Vermögensverwaltung GmbH & Co. KG., 61276 Weilrod (DE)
(72) Erfinder: ZENTNER, Lena, 98693 Ilmenau (DE); RISTO, Uwe, 99086 Erfurt (DE); UHLIG, René, 98693 Ilmenau (DE); ZIMMERMANN, Dirk, Weilrod 61276 (DE)
(74) Vertreter: Engel, Christoph Klaus
(86) Internationale Anmeldenummer: PCT/EP2009/066122
(87) Internationale Veröffentlichungsnummer: WO 2010/063703

(56) Entgegenhaltungen:
- WO-A1-01/98693
- DE-A1- 3 339 437
- JP-A- 59 221 477
- US-A- 4 346 731

## Beschreibung

Die Erfindung betrifft ein thermisch gesteuertes Expansionsventil (auch als Entlüftungsventil bezeichnet) mit einer oberseitigen Ventilöffnung. Das Expansionsventil nutzt konstruktionsbedingt unter anderem den mechanischen Durchschlageffekt aus. Verwendung findet dieses Ventil in der allgemeinen Rohrleitungstechnik, vorzugsweise beim Einsatz in solarthermischen Anlagen.

Schließmechanismen für Rohrleitungen werden im Allgemeinen eingesetzt, um den Ein- und Auslass von Medien zu kontrollieren und dabei die Fließrichtung zu steuern und zu regulieren. Je nach Einsatzzweck unterscheiden sich die Schließsysteme in der Art ihrer Betätigung. Manuell betätigte Ventile findet man vorrangig in Anwendungsbereichen, bei denen eine permanente Regelung des Strömungsmediums nicht zwingend für die Funktionsfähigkeit einer Anlage erforderlich ist.

In solarthermischen Anlagen beispielsweise müssen für deren sichere und effiziente Funktion die anfallenden Gase regelmäßig aus dem System abgeleitet werden. Dazu kommen derzeit Kombinationen von Kugelhähnen und Schwimmerventilen oder Konstruktionen mit aufwendigen Membranen zum Einsatz. Diese herkömmlichen Lösungen sind sehr kostenintensiv und wenig effizient, denn während des Betriebs der Anlage müssen die Kugelhahn-Schwimmerventil-Kombinationen stets geschlossen gehalten werden. Für die Entlüftung der Anlage muss dann ein Handwerker auf das Dach steigen und den Kugelhahn per Hand betätigen. Aufgrund dieses Aufwands unterbleibt das regelmäßige Entlüften in der Praxis sehr häufig. Dadurch nimmt der Wirkungsgrad der solarthermischen Anlage ab und eine effiziente Nutzung ist nicht mehr gewährleistet.

Die Funktionsweise eines automatischen Entlüftungsventils mit Schwimmer, wie in DE 60 2004 004 603 T2, DE 699 17 528 T2, US 5.950.659, EP 0 854 310 A1, WO 02/074571 und DE 2 307 802 A beschrieben, basiert auf dem archimedischen Prinzip. Im Inneren eines sogenannten Entlüftergehäuses befindet sich ein Schwimmkörper, der z. B. über ein Hebelsystem mit einem Ventil gekoppelt ist. Befindet sich im Entlüftergehäuse kein Fluid, dann betätigt der Schwimmkörper durch sein Eigengewicht das Hebelsystem. Das Ventil befindet sich im geöffneten Zustand. Nach dem Befüllen der Anlage steigt der Schwimmkörper aufgrund der durch ihn verdrängten Flüssigkeit im Gehäuse des Entlüfters nach oben. Das Ventil geht in den geschlossenen Zustand über.

Beispielsweise die DE 2 307 802 A zeigt ein nach dem zuvor erläuterten Prinzip arbeitendes Schwimmer-Entlüftungsventil mit einer oberseitigen Luftaustrittsöffnung, welches insbesondere in Warmwasser-Heizungsanlagen eingesetzt wird. Der Schwimmer dieses Ventils greift seitlich der Luftaustrittsöffnung lose an einem gesonderten Ventilglied an, welches an einem Vorsprung abgestützt ist, der der Luftaustrittsöffnung gegenüberliegt. Die Mündung der Luftaustrittsöffnung wirkt als Ventilsitz und der Schwimmer trägt in seiner Mitte eine mit dem Ventilsitz zusammenwirkende Dichtung.

Um die Funktionsfähigkeit derartiger Entlüftungsventile gewährleisten zu können, muss dieses am höchsten Punkt einer solarthermischen oder ähnlichen Anlage installiert werden, da die aus dem Betriebsmedium freigesetzten Gase in der Anlage nach oben aufsteigen und sich am höchsten Punkt sammeln.

Ein weiterer Nachteil herkömmlicher Kugelhahn-Schwimmer-Kombinationen ergibt sich aus ihrem Aufbau. Es handelt sich dabei um Baugruppen, die in der Regel aus einer hohen Anzahl von Einzelbauteilen bestehen. Daraus resultiert ein hoher Fertigungsaufwand mit entsprechend hohen Produktionskosten und einem erhöhten Ausfallrisiko.

Die WO 01/98693 A1 beschreibt ein Ventil, dessen Ventilkörper zum Verschließen eines Durchlasses über eine Leitung mit einem Gas befüllt werden kann, um den Ventilkörper auszudehnen.

In der DE 101 51 947 A1 ist eine Vorrichtung zum Verschließen einer Leitung beschrieben, die als Absperrelement einen Ballon verwendet, der über eine Druckmedienleitung mit einem Medium gefüllt werden kann, um seinen Querschnitt innerhalb der Leitung zu vergrößern.

Die Aufgabe der vorliegenden Erfindung besteht deshalb darin, ein verbessertes Expansionsventil bereitzustellen, welches trotz vereinfachter Bauform mit minimalem Aufwand das Entlüften solarthermischer oder ähnlicher Anlagen vollkommen automatisch gestattet. Weiterhin soll eine Anordnung zur automatischen Entlüftung eines Kanalsystems angegeben werden.

Erfindungsgemäß gelingt die Lösung dieser Aufgabe mit einem Expansionsventil gemäß Patentanspruch 1. Vorteilhafte Ausgestaltungen dieses Ventils sind in den Unteransprüchen angegeben. Die im Anspruch 9 definierte Anordnung zur automatischen Entlüftung eines Kanalsystems verwendet erfindungsgemäß ein derartiges Expansionsventil am höchsten Punkt des zu entlüftenden Kanalsystems.

Anders als herkömmliche, allein die Auftriebskraft eines Schwimmers in einem Medium nutzende Entlüftungsventile handelt es sich bei dem erfindungsgemäßen Expansionsventil um ein thermisch gesteuertes Ventil, welches durch Integration einer "intelligenten" passiven Aktuatorik in der Lage ist, das Schwimmerventil und das Absperrventil (Kugelhahn) in einer Einheit zusammenzufassen. Dabei wird die Verformung eines Mittels zum Verschließen einer Ein- und/oder Auslassöffnung, also eines Verschluss- oder Schwimmkörpers infolge der durch eine Temperaturänderung eines Betriebsmediums bedingten Druckänderung eines Gases im Inneren des Schwimmkörpers realisiert. Damit ist einerseits die Funktion des automatischen Entlüftens sichergestellt, des Weiteren können der Fertigungsprozess vereinfacht und die Produktionskosten für das Ventil signifikant gesenkt werden.

Der Verschlusskörper besitzt ein thermisches Ausdehnungsverhalten, welches bei erhöhter Wärmezufuhr über das Betriebsmedium - wenn dieses eine Arbeitstemperatur besitzt - zum Verschluss wenigstens der Auslassöffnung durch Bereiche des ausgedehnten Verschlusskörpers führt und bei verringerter Wärmezufuhr über das Betriebsmedium - wenn dieses eine Ruhetemperatur besitzt - zur Freigabe wenigstens der Auslassöffnung führt. Dazu ist sind die Abmessungen des Gehäuses und des Verschlusskörpers so aufeinander abgestimmt, dass die thermisch bedingte Volumenausdehnung des Verschlusskörpers genügt, um zumindest die Auslassöffnung am Gehäuse durch Bereiche des ausgedehnten Verschlusskörpers dicht zu verschließen, sodass dort kein Betriebsmedium mehr austreten kann.

Das erfindungsgemäße Entlüftungsventil eignet sich zum vertikalen Einbau in eine vorzugsweise solarthermische Anlage. Es umfasst ein vorzugsweise rotationssymmetrisches Gehäuse mit einer unterhalb einer Auslassöffnung befindlichen Einlassöffnung, in dem sich im Betriebsmedium ein vorzugsweise rotationssymmetrischer Schwimmkörper (Verschlusskörper) befindet. Der Schwimmkörper ist z.B. mit einem Gas gefüllt (oder aus einem auf dem Betriebsmedium schwimmfähigen Material gefertigt) und besitzt mindestens an seine der Auslassöffnung gegenüberliegenden Stirnseite Mittel bzw. Bereiche zum Verschließen der Auslassöffnung. Dieser Bereich bildet eine Dichtfläche, welche die Auslassöffnung verschließt, sobald das Betriebsmedium im Gehäuse einen Schließfüllstand erreicht. Der Schwimmkörper und/oder das Mittel zum Verschließen der Auslassöffnung sind ganz oder teilweise aus einem hochelastischen, reversibel verformbaren Material gebildet. In dieser Ausgestaltung agiert der Verschlusskörper sowohl als herkömmlicher Schwimmer, als auch als thermisch expansives Element zur Ventilbetätigung aufgrund Wärmezufuhr.

In einer weitergebildeten Ausführungsform besitzt der Verschlusskörper außerdem Bereiche zum Verschließen der Eingangsöffnung aufgrund thermischer Ausdehnung des Verschlusskörpers.

Gemäß einer bevorzugten Ausführungsform des Entlüftungsventils weist der Schwimmkörper eine Faltenbalgstruktur auf. Bei abgewandelten Ausführungsformen ist das Mittel zum Verschließen der Ein- und/oder Auslassöffnung derart ausgebildet, dass bei Druckbelastung eine ein- oder mehrstufige sprunghafte Formänderung oder eine kontinuierliche Formänderung auftritt.

Die detaillierte Beschreibung sowie weitere Vorteile der Erfindung sind dem nachfolgenden Beschreibungsteil zu entnehmen, in dem die Erfindung unter Bezugnahme auf die beigefügten Zeichnungen näher erläutert wird. Es zeigen:
- Fig. 1 -: eine erste prinzipielle Ausführung des erfindungsgemäßen Expansionsventils im geöffneten Zustand;
- Fig. 2 -: die Ausführung des Expansionsventils aus Fig. 1 im geschlossenen Zustand;
- Fig. 3 -: eine zweite prinzipielle Ausführung des erfindungsgemäßen Expansionsventils im geöffneten Zustand;
- Fig. 4 -: eine dritte prinzipielle Ausführung des erfindungsgemäßen Entlüftungsventils im geöffneten Zustand mit einem Verschlusskörper mit Faltenbalgstruktur und sphärischen Verschlusskappen.

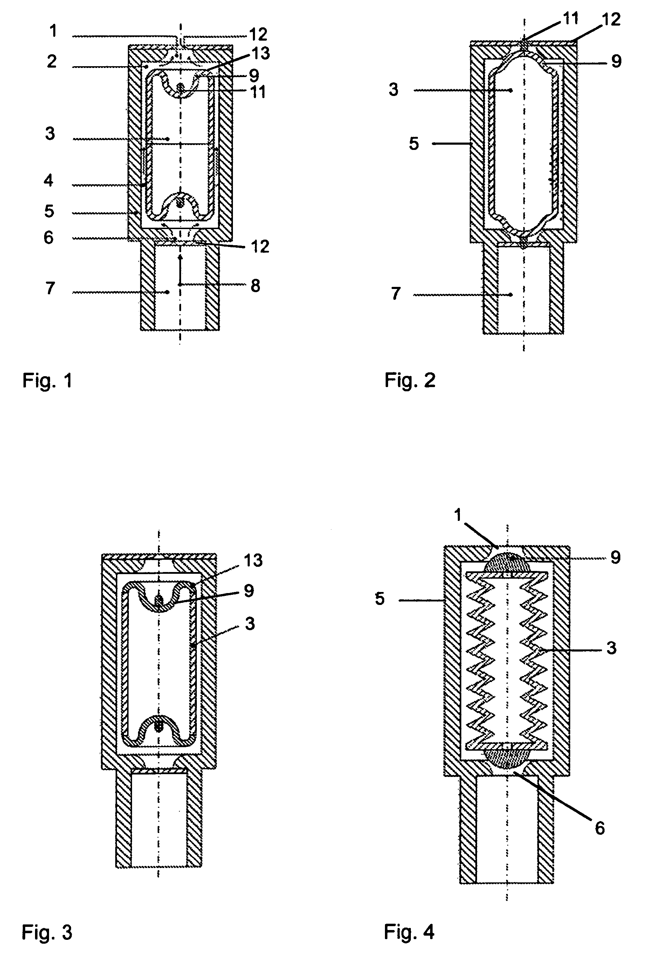

Wie in Fig. 1 gezeigt ist, umfasst das erfindungsgemäße Expansionsventil ein vorzugsweise rotationssymmetrisches Gehäuse 5, welches in der gezeigten Ausführungsform am oberen Ende eine Auslassöffnung 1 und am unteren Ende eine Einlassöffnung 6 aufweist. Im Gehäuse 5 befindet sich ein hohler, dicht abgeschlossener Verschlusskörper 3, der nach der Terminologie herkömmlicher Ventile auch als Schwimmkörper bezeichnet werden kann, wobei es für die Funktion des Ventils hier aber nicht allein auf ein "Schwimmen" im Betriebsmedium ankommt, wie es die nachfolgende Beschreibung verdeutlicht. Der im Gehäuse 5 ausgebildete Hohlraum ist so dimensioniert, dass zumindest im nicht ausgedehnten Zustand des Verschlusskörpers über die Einlassöffnung 6 Betriebsmedium in das Gehäuse einströmen kann. Solang noch nicht soviel flüssiges Betriebsmedium eingeströmt ist, dass der Verschlusskörper gegen die Auslassöffnung 1 gepresst wird, d.h. ein Schließfüllstand ist noch nicht erreicht, kann in der Anlage befindliches Gas über die Auslassöffnung entweichen, wenn der Verschlusskörper nicht expandiert ist.

Der Verschlusskörper 3 weist in dieser Ausführungsform mindestens stirnseitig einen Bereich partieller Nachgiebigkeit 9 auf, welcher aus einem hochelastischen Material besteht. Der Bereich partieller Nachgiebigkeit kann auch als Verschlusskappe oder noch allgemeiner als Mittel zum Verschließen einer Durchlassöffnung (Ein- oder Auslassöffnung) bezeichnet werden. Im dargestellten Beispiel besitzt der Verschlusskörper 3 an seinen beiden gegenüberliegenden Stirnseiten eine solche Verschlusskappe 9 in Form eines Bereichs partieller Nachgiebigkeit.

Bei einer abgewandelten Ausführung kann der gesamte Verschlusskörper 3 aus einem hochelastischen Material gebildet sein. Ebenso kann der Verschlusskörper aus einem thermisch expansiven Vollmaterial bestehen, welches ein ausgeprägtes, thermisch abhängiges Dehnungsverhalten zeigt.

Durch den vertikalen Einbau des Expansionsventils in der solarthermischen Anlage treibt der Verschlusskörper 3 im geöffneten Ventilzustand in bzw. auf einem flüssigen Betriebsmedium 7, welches beim Befüllen der Anlage im Gehäuse 5 des Expansionsventils aufsteigt. Die Flussrichtung des Betriebsmediums 7 bei geöffnetem Ventil ist durch einen Pfeil 8 verdeutlicht. Es stellt sich ein Flüssigkeitsstand 4 ein. Der Verschlusskörper 3 ist dadurch zum Teil vom Betriebsmedium 7, welches eine Temperatur T_{BM} besitzt, und zum Teil mit Luft 2 umgeben. Der Verschlusskörper 3 selbst ist bei der hier gezeigten Ausführungsform mit einem Gas gefüllt und weist einen Innendruck pᵢ (T_{BM}) auf, der von der Temperatur T_{BM} abhängig ist. Im Übrigen ist der Verschlusskörper dicht verschlossen, sodass keine Medien ein- oder austreten können.

Anstelle des gasgefüllten Verschlusskörpers kann dieser auch aus einem thermisch expansivem Material bestehen und beispielsweise porös sein, um eine gute Wärmezufuhr über eindringendes Betriebsmedium zu gestatten.

Sofern kaltes Betriebsmedium vermehrt in das Gehäuse 5 eindringt, kommt es zwar nicht zu einer thermisch bedingten Ausdehnung des Verschlusskörpers, jedoch arbeitet der Verschlusskörper bei vertikalem Ventileinbau dann als Schwimmer, d.h. er wird von der Auftriebskraft mit seiner oberen Stirnseite gegen die Auslassöffnung 1 gepresst, um diese dicht zu verschließen, sodass kein Betriebsmedium austreten kann. Erreicht der Flüssigkeitsstand einen vorgegebenen Schließfüllstand, wird der Verschlusskörper mit einer oberen Dichtfläche 13 gegen die Auslassöffnung 1 gepresst. In diesem Fall schließt die umlaufende obere Dichtfläche 13 des Verschlusskörpers 3 dicht mit der Innenwand des Gehäuses ab.

Der Verschlusskörper 3 ist vorzugsweise rotationssymmetrisch gestaltet, kann aber auch in sonstiger Weise an die Form des Gehäuses 5 angepasst sein, um zumindest eine lineare Expansion und vorzugsweise auch Verschiebbarkeit zu gewährleisten. Die stirnseitige partielle Nachgiebigkeit des Körpers kann durch dessen geometrische Gestaltung derart beeinflusst werden, dass je nach gewünschter Ausführung ein schlagartiges oder kontinuierliches Verschließen der Ein- und Auslassöffnung gewährleistet ist. Dies geschieht bei der in Fig. 1 dargestellten Ausführung durch hochelastische, teilweise sphärisch geformte Strukturen 9 (Verschlusskappen). Gemäß einer bevorzugten Ausführungsform besitzt der Bereich der stirnseitigen partiellen Nachgiebigkeit 9 ein als Dom ausgeführtes Verschlusselement 11, welches an die zugehörige Durchlassöffnung in einer Verschlussplatte 12 angepasst ist, um diese beim Eindringen dicht abzuschließen.

In Fig. 2 ist das erfindungsgemäße Expansionsventil im geschlossenen Zustand dargestellt. Durch die Erhöhung der Temperatur T_{BM} des Mediums 7 während des Betriebs der Anlage (Arbeitstemperatur) ändert sich der Innendruck pᵢ (T_{BM}) im Verschlusskörper 3. Diese positive Innendruckänderung bewirkt, dass der Verschlusskörper 3 elastisch gedehnt wird und somit die stirnseitigen Bereiche partieller Nachgiebigkeit 9 infolge des Druckes mechanisch durchschlagen. Damit kommt es zu einem Verschluss der den Verschlusskappen 9 gegenüberliegenden Durchlassöffnungen, d.h. der Auslassöffnung 1 und/oder der Einlassöffnung 6.

Ist der gesamte Verschlusskörper aus elastischem Material gefertigt, wird er bei weiterem Anstieg der Temperatur auch radial elastisch gedehnt. Diese radiale Dehnung bewirkt, dass sich der Verschluss- oder Schwimmkörper 3 flächig an die innere Wand des Gehäuses 5 des Ventils anlegt und somit die Verschlusswirkung des Ventils weiter verstärkt. Dadurch wird eine gezielte Redundanz für die Schließsicherheit bereitgestellt, denn es sind drei Sperrstellen ausgebildet (Einlassöffnung 6, Auslassöffnung 1 und Innenwand des Gehäuses 5). Die weitere Wärmezufuhr an den Verschlusskörper erfolgt dann über das an der unteren Stirnseite weiter anliegende Betriebsmedium 7 sowie über die Gehäusewandung, die dazu vorzugsweise aus einem gut wärmeleitenden Material (z.B. Kupfer oder Messing) gefertigt ist.

Der Verschlusskörper 3 und die stirnseitigen Bereiche partieller Nachgiebigkeit 9 (Verschlusskappen) können auch so gestaltet werden, dass zunächst eine radiale Dehnung des Körpers auftritt, danach folgt eine Verformung der Stirnseiten. Selbstverständlich liegt es auch im Bereich der Erfindung die Merkmale dieser Ausführungsvarianten miteinander zu kombinieren, d.h. die Elastizität der einzelnen Abschnitte des Verschlusskörpers so zu gestalten, dass zunächst die erste Stirnseite verformt wird, dann eine radiale Dehnung des Verschlusskörpers erfolgt und bei weiterem Temperatur- und damit einhergehenden Druckanstieg auch die zweite Stirnseite verformt wird, um eine Dichtwirkung zu erzielen.

Nimmt die Temperatur des Betriebsmediums wieder ab, so kommt es zu einer Verringerung des Druckes im Inneren des Verschlusskörpers und der stirnseitige Bereich partieller Nachgiebigkeit 9 nimmt infolge der Entlastung wieder seine ursprüngliche Ausgangslage ein. Das Ventil befindet sich nun im geöffneten Zustand und eine Entlüftung der Anlage kann erneut stattfinden. Die Vorrichtung befindet sich wieder in dem Zustand, wie sie Fig. 1 und 3 zeigen.

Fig. 3 zeigt das erfindungsgemäße Expansionsventil im geöffneten Zustand. Bei dieser Ausführung ist zwischen den stirnseitigen Bereichen partieller Nachgiebigkeiten 9 ein zylindrisches Mittelstück 10 eingefügt, das aus einem Material besteht, welches nur eine sehr geringe radiale Verformung zulässt. Dadurch ist gewährleistet, dass kein Verschluss mit der Gehäuseinnenwand des Gehäuses 5 auftritt. Somit tritt nur eine axiale Verformung des Verschlusskörpers im Bereich der Verschlusskappen 9 auf.

In Fig. 4 ist eine dritte Ausführungsform des Entlüftungsventils (Expansionsventils) abgebildet, bei welcher der Verschluss- oder Schwimmkörper 3 über eine Faltenbalgstruktur verfügt. Die Faltenbalgstruktur ermöglicht bei Temperaturerhöhung eine kontinuierliche axiale Verformung des Verschlusskörpers 3, die dazu führt, dass die Verschlusskappen 9 die Ein- und Auslassöffnungen 6, 1 verschließen. Die Verschlusskappen 9 selbst können hierbei eine starre, unveränderliche Form aufweisen, während der Verschlusskörper im mittleren Bereich die erforderliche axiale Elastizität aufweist.

Eine weitere Ausführung des erfindungsgemäßen Expansionsventils (ohne Abbildung) verfügt über eine stirnseitige partielle Nachgiebigkeit aus einem hochelastischen Material, sodass eine kontinuierliche oder mehrstufige Reduktion des Gasauslasses bis hin zum vollständigen Verschließen des Ventils ermöglicht wird. Die Stirnseite ist so gestaltet, dass durch die Innendruckbelastung des Verschlusskörpers infolge der Temperaturerhöhung des Betriebsmediums eine kontinuierliche oder eine einfach oder mehrfach sprungförmige axiale Verformung erzeugt wird. Dies wird zum Beispiel durch eine rotationssymmetrische mehrfach gewellte oder gefaltete Struktur realisiert.

Mit dem erfindungsgemäßen Expansionsventil erfolgt die Entlüftung von solarthermischen Anlagen rein mechanisch ohne zusätzliche Energiezufuhr, nachdem die Temperatur des Betriebsmediums in der Anlage unter die Grenztemperatur abgesunken ist. Die konstruktive Auslegung des Expansionsventils (geometrische Struktur und Material) ermöglicht die Integration einer "intelligenten" passiven Aktuatorik und Steuerung. Dadurch kann gewährleistet werden, dass mit einer solarthermischen Anlage die zur Verfügung stehende Sonnenenergie effizient genutzt werden kann. Außerdem erlaubt die einfache Grundbauform des Ventils eine kostengünstige Produktion mit minimiertem Materialeinsatz und unter Zuhilfenahme moderner Produktionsmethoden.

### Bezugszeichenliste

- 1 -: Auslassöffnung
- 2 -: Luft im Gehäuseinneren
- 3 -: gasgefüllter Verschlusskörper (Schwimmkörper)
- 4 -: Füllstand des Betriebsmediums
- 5 -: Gehäuse
- 6 -: Einlassöffnung
- 7 -: Betriebsmedium
- 8 -: Flussrichtung des Betriebsmediums bei geöffnetem Ventil
- 9 -: Mittel zum Verschließen der Ein- und Auslassöffnungen (Verschlusskappe)
- 10 -: zylindrisches Mittelstück
- 11 -: Verschlusselement
- 12 -: Verschlussplatte
- 13 -: Dichtfläche

## Patentansprüche

1. Expansionsventil zum automatischen Entlüften einer ein flüssiges Betriebsmedium (7) mit wechselnder Temperatur (T_{BM}) führenden Anlage, insbesondere einer Solarthermieanlage, umfassend
- ein Gehäuse (5) mit einer in vertikaler Einbaulage unten liegenden, das Betriebsmedium (7) einlassenden Einlassöffnung (6) sowie einer in vertikaler Einbaulage oben liegenden, ein Entlüftungsgas auslassenden Auslassöffnung (1) ;
- einen im Gehäuses (5) angeordneten Verschlusskörper (3), der eine geringere Dichte als das Betriebsmedium hat und dessen Abmessungen derart an das Gehäuse (5) angepasst sind, dass zumindest im geöffneten Ventilzustand im Gehäuse (5) Raum zur Aufnahme des Betriebsmediums (7) verbleibt;
**dadurch gekennzeichnet, dass** der Verschlusskörper eine der Auslassöffnung gegenüberliegende Dichtfläche besitzt, die bei Erreichen eines vorgegebenen Schließfüllstandes des Betriebsmediums (7) im Gehäuse (5) gegen die Auslassöffnung (1) gepresst wird und diese verschließt, und dass der Verschlusskörper (3) ein thermisches Ausdehnungsverhalten besitzt, welches bei erhöhter Wärmezufuhr über das Betriebsmedium zum Verschluss wenigstens der Auslassöffnung (1) durch thermisch ausgedehnte Bereiche (9) des Verschlusskörpers (3) führt, auch wenn der Schließfüllstand im Gehäuse (5) nicht erreicht ist.

2. Expansionsventil nach Anspruch 1, **dadurch gekennzeichnet, dass** der Verschlusskörper (3) hohl, gasgefüllt und gegenüber dem Betriebsmedium dicht ist sowie zwei gegenüberliegende stirnseitige Bereiche mit partieller Nachgiebigkeit (9) besitzt, die bei Druckerhöhung im Verschlusskörper (3) aufgrund Wärmezufuhr über das Betriebsmedium mit Arbeitstemperatur die gegenüberliegende Ein- bzw. Auslassöffnung (6, 1) verschließen.

3. Expansionsventil nach Anspruch 1 oder 2, **dadurch gekennzeichnet, dass** an den Stirnseiten des Verschlusskörpers (3), die der Ein- bzw. Auslassöffnung (6, 1) gegenüberliegen, jeweils ein als Dom ausgebildetes Verschlusselement (11) angebracht ist, welches mit am Gehäuse (5) angebrachten Verschlussplatten (12) einen Ventilverschluss bildet.

4. Expansionsventil nach einem der Ansprüche 1 bis 3, **dadurch gekennzeichnet, dass** der Verschlusskörper (3) an seinen Längsseiten aus einem dehnfesten Material besteht, sodass bei erhöhter Wärmezufuhr eine Ausdehnung nur an den Stirnseiten des Verschlusskörpers in axialer Richtung auftritt.

5. Expansionsventil nach einem der Ansprüche 1 bis 3, **dadurch gekennzeichnet, dass** der Verschlusskörper (3) wenigstens abschnittsweise aus einem hochelastischen Material besteht, welches bei erhöhter Wärmezufuhr eine Ausdehnung auch in radialer Richtung gestattet, um zumindest Abschnitte der Längsseiten des Verschlusskörpers (3) dichtend gegen die Innenwand des Gehäuses (5) zu pressen.

6. Expansionsventil nach einem der Ansprüche 1 bis 3, **dadurch gekennzeichnet, dass** der Verschlusskörper (3) eine Faltenbalgstruktur aufweist, die bei erhöhter Wärmezufuhr eine Ausdehnung in axialer Richtung gestattet.

7. Expansionsventil nach einem der Ansprüche 1 bis 6, **dadurch gekennzeichnet, dass** der Verschlusskörper (3) rotationssymmetrisch geformt ist.

8. Expansionsventil nach einem der Ansprüche 1 bis 7, **dadurch gekennzeichnet, dass** der Verschlusskörper (3) axial beweglich im Gehäuse (5) gelagert ist.

9. Anordnung zur automatischen Entlüftung eines ein flüssiges Betriebsmedium führenden Kanalsystems, insbesondere Solarthermieanlage, **dadurch gekennzeichnet, dass** am höchsten Punkt des zu entlüftenden Kanalsystems ein Expansionsventil nach einem der Ansprüche 1 bis 8 angeordnet ist.

## Claims

1. An expansion valve for automatically ventilating a system, in particular a solar-thermal system, which conducts a liquid operating medium (7) with a varying temperature (TBM), comprising
- a housing (5) with an inlet opening (6) which, in the vertical installation position, is situated at the bottom and serves as an inlet for the operating medium (7), and with an outlet opening (1) which, in the vertical installation position, is situated at the top and serves as an outlet for a ventilation gas;
- a closing body (3) which is arranged in the housing (5) and which has a lower density than the operating medium, and the dimensions of which are adapted to the housing (5) in such a manner that at least in the opened state of the valve, space for receiving the operating medium (7) remains in the housing (5);
**characterized in that** the closing body has a sealing surface which is situated opposite the outlet opening and which upon reaching a predetermined closing filling level of the operating medium (7) in the housing (5), is pressed against the outlet opening (1) and closes the same, and that the closing body (3) has a thermal expansion behavior which, in the event of increased heat supply via the operating medium, results **in that** at least the outlet opening (1) is closed by thermally expanded regions (9) of the closing body (3) even if the closing filling level in the housing (5) is not reached.

2. The expansion valve according to claim 1, **characterized in that** the closing body (3) is hollow, filled with gas and sealed with respect to the operating medium, and has two opposing front side regions with partial flexibility (9) which, upon pressure increase in the closing body (3) due to heat supply via the operating medium with operating temperature, close the opposing inlet or outlet opening (6, 1).

3. The expansion valve according to claim 1 or claim 2, **characterized in that** on the closing body's (3) front sides which are situated opposite the inlet and outlet openings (6, 1), respectively, in each case one closing element (11) is attached which is configured as a dome and which, together with closing plates (12) attached to the housing (5), forms a valve closure.

4. The expansion valve according to any one of the claims 1 to 3, **characterized in that** on its longitudinal sides, the closing body (3) consists of an expansion-resistant material so that in the event of increased heat supply, expansion occurs only in the axial direction on the front sides of the closing body.

5. The expansion valve according to any one of the claims 1 to 3, **characterized in that** the closing consists, at least in sections, of a highly elastic material which, in the event of increased heat supply, allows an expansion also in the radial direction in order to sealingly press at least sections of the longitudinal sides of the closing body (3) against the inner wall of the housing (5).

6. The expansion valve according to any one of the claims 1 to 3, **characterized in that** the closing body (3) has a bellows structure which, in the event of increased heat supply, allows an expansion in the axial direction.

7. The expansion valve according to any one of the claims 1 to 6, **characterized in that** the closing body (3) is formed rotationally symmetric.

8. The expansion valve according to any one of the claims 1 to 7, **characterized in that** the closing body (3) is mounted to be axially movable in the housing (5).

9. An arrangement for automatically ventilating a duct system, in particular a solar-thermal system, which conducts a liquid operating medium, **characterized in that** at the highest point of the duct system to be ventilated, an expansion valve according to any one of the claims 1 to 8 is arranged.

## Revendications

1. Soupape d'expansion pour la purge automatique d'une installation véhiculant un fluide de service (7) liquide avec une température variable (T_{BM}), en particulier d'une installation thermo-solaire, comprenant
- un boîtier (5) avec une ouverture d'entrée (6) disposée en bas dans la position de montage verticale et laissant entrer le fluide de service (7) et une ouverture de sortie (1) disposée en haut dans la position de montage verticale et laissant sortir un gaz de purge ;
- un corps de fermeture (3) disposé dans le boîtier (5), qui a une densité plus faible que le fluide de service, et dont les dimensions sont adaptées au boîtier (5), de telle sorte que, au moins lorsque la soupape est ouverte, il reste dans le boîtier (5) de l'espace pour le logement du fluide de service (7) ;
**caractérisée en ce que** le corps de fermeture présente une surface d'étanchéité faisant face à l'ouverture de sortie, qui est pressée contre l'ouverture de sortie (1) lorsqu'on atteint un niveau de remplissage de fermeture prédéfini du fluide de service (7) dans le boîtier (5) et ferme cette ouverture, et **en ce que** le corps de fermeture (3) présente un comportement d'expansion thermique, lequel, dans le cas d'une arrivée de chaleur élevée par le fluide de service, aboutit à la fermeture au moins de l'ouverture de sortie (1) par des zones (9) dilatées thermiquement du corps de fermeture (3), même lorsque le niveau de remplissage de fermeture n'est pas atteint dans le boîtier (5).

2. Soupape d'expansion selon la revendication 1, **caractérisée en ce que** le corps de fermeture (3) est creux, rempli de gaz et étanche par rapport au fluide de service et présente deux zones côté avant se faisant face avec une flexibilité partielle (9), lesquelles, en cas d'élévation de pression dans le corps de fermeture (3) en raison d'une arrivée de chaleur par le fluide de service avec la température de travail, ferment les ouvertures d'entrée et de sortie (6, 1) se faisant face.

3. Soupape d'expansion selon la revendication 1 ou 2, **caractérisée en ce qu'**à chaque fois un élément de fermeture (11), conçu sous forme de dôme, qui forme une fermeture de soupape avec des plaques de fermeture (12) placées sur le boîtier (5), est placé sur les côtés avant du corps de fermeture (3), qui font face aux ouvertures d'entrée et de sortie (6, 1).

4. Soupape d'expansion selon l'une des revendications 1 à 3, **caractérisée en ce que** le corps de fermeture (3) est à base d'un matériau résistant à l'extension sur ses côtés longitudinaux, de sorte que, en cas d'arrivée de chaleur importante, une extension apparaît seulement sur les côtés avant du corps de fermeture dans le sens axial.

5. Soupape d'expansion selon l'une des revendications 1 à 3, **caractérisée en ce que** le corps de fermeture (3) est au moins par endroits à base d'un matériau très élastique, lequel permet, en cas d'arrivée de chaleur importante, une extension également dans le sens radial, afin de comprimer au moins des endroits des côtés longitudinaux du corps de fermeture (3) de façon étanche contre la paroi interne du boîtier (5).

6. Soupape d'expansion selon l'une des revendications 1 à 3, **caractérisée en ce que** le corps de fermeture (3) présente une structure de soufflet, qui permet, en cas d'arrivée de chaleur importante, une extension dans le sens axial.

7. Soupape d'expansion selon l'une des revendications 1 à 6, **caractérisée en ce que** le corps de fermeture (3) est formé avec une symétrie de rotation.

8. Soupape d'expansion selon l'une des revendications 1 à 7, **caractérisée en ce que** le corps de fermeture (3) est monté de façon mobile axialement dans le boîtier (5).

9. Agencement pour la purge automatique d'un système de canal véhiculant un fluide de service liquide, en particulier une installation thermo-solaire, **caractérisé en ce qu'**une soupape d'expansion selon l'une des revendications 1 à 8 est disposée sur le point le plus haut du système de canal à purger.
